# EUROPEAN PATENT SPECIFICATION

(11) **EP 1 027 829 B1**
(45) Date of publication and mention of the grant of the patent: **25.06.2003**
(21) Application number: 00200265.7
(22) Date of filing: 24.01.2000
(51) Int. Cl.: A22B 5/00

(54) **Method and device for detaching the bung of a carcass**
Verfahren und Vorrichtung zum Lösen des Mastdarmes eines Schlachttierkörpers
Dispositif et procédé à détacher le rectum d'une carcasse

(30) Priority: 12.02.1999 NL 1011287
(43) Date of publication of application: 16.08.2000
(60) Divisional application: 02078278.5
(73) Proprietor: Stork MPS B.V., 7131 PG Lichtenvoorde (NL)
(72) Inventor: Van Ochten, Sander Antonie, 6824 AD Arnhem (NL); Post, Gerard Jan, 7559 KG Hengelo (NL)
(74) Representative: Van den Heuvel, Henricus Theodorus

(56) References cited:
- EP-A- 0 492 735
- EP-A- 0 601 812
- WO-A-92/13458

## Description

The invention relates to a method for detaching the outer end of the rectum of a carcass, comprising the steps of: A) drilling out the outer end of the rectum, B) pulling the drilled-out outer end of the rectum out of the carcass, and C) guiding the carcass and guiding the outer end of the rectum at a distance from the carcass. The invention also relates to a device for detaching the outer end of the rectum of a carcass, comprising: a conveyor for carcasses, a vent cutter for separating an outer end of the rectum and a carcass, pull-out means for pulling the drilled-out outer end of the rectum from the carcass, and guide means for the pulled-out outer end of the rectum..

During the slaughter of animals, such as pigs in particular; the carcasses of killed animals are suspended in industrial scale processing from a conveyor in order to be carried along a number of processing stations. Examples of such processes are: cleaving of the pubic bone, opening of the belly, detaching of the outer end of the rectum (also-referred to as vent cutting), severing of the pizzle, removal of guts and so on. It is of great importance that operations on the carcass have the least possible adverse effect on the quality of the meat. It is thus important to minimize the contact between the contents of the intestines, and particularly of the rectum, and the meat. Because detaching of the outer end of the rectum (the bung) takes place at a position different from the removal of the guts from the carcass, it is desirable to take measures to prevent the content of the severed outer end of the rectum coming into contact with the carcass. In addition, the outer end of a severed outer end of the rectum must also be prevented from coming into contact with the carcass, since this is also contaminated on the outside by the severing. Existing measures provide for closing of the anus by for instance arranging a plug of fat therein. Devices also exist with which a detached outer end of the rectum can be enclosed. In further processing of the outer end of the rectum the enclosure must then be removed. The hygiene of the existing methods and devices is limited.

The international patent application WO 92/13458 describes a method and device for mechanized cutting out and removal of the anus of a slaughtered animal, wherein a drilled-out outer end of the rectum is moved in horizontal direction to the ventral side of the carcass, where after the outer end of the rectum is hung over a screening plate so that there is no contact between the outer end of the outer end of the rectum and the carcass. This method and device are relatively complex because drilling out of the outer end of the rectum has to take place over the carcass and the device must then be moved between the legs of the carcass to the ventral side. A mirror is arranged to position the device in the correct manner for drilling out an outer end of the rectum.

The slaughterer has to position the device using visual information obtained with the mirror. This work is ergonomically hazardous and, due to the complexity, absolutely impossible to automate. The drilled-out outer end of the rectum is then hung over a plate, which implies a position of the outer end of the rectum which is not fully controlled. The outer ends of the rectum will thus be pulled over the edge of the screening plate. An additional drawback of this method and device is that it obstructs access to the abdominal cavity.

The present invention has for its object to provide an improved method and device for detaching the outer end of the rectum of a carcass with which a carcass can be processed in automated, hygienic manner.

The invention provides for this purpose a method for detaching the outer end of the rectum of a carcass, according claim 1. Pulling out the drilled-out outer end of the rectum and then guiding the outer end of the rectum at a distance from the carcass prevents the outer end of the rectum lying against the carcass. The outer end of the rectum is carried along a guide close to the anal orifice, on the rear side of a carcass close to the rectal area, or in other words at a short distance from the pelvic channel. The drilled-out outer end of the rectum, also referred to as the detached part of the rectum, is generally 10-20 centimetres long and the stretch thereof is such that the outer end thereof can be placed into contact with the guide. It thus becomes possible to drill out the outer end of the rectum via the rear side of a carcass and to then place the pulled-out outer end of the rectum in simple manner into contact with the guide. This method can be performed relatively simply and is ergonomically safer than the prior art method. This simplified method moreover enables automating of the process. In the method according to the invention the drilled-out outer end of the rectum, or the drilled-out anus, need undergo no further processing for closure or enclosure thereof and forms no obstruction to processing of the abdominal cavity.

The outer end of the rectum pulled out during step B) is preferably engaged during step C) such that the outer end of the rectum is prevented from returning to the original position thereof. Engaging of the outer end of the rectum entails the outer end being grasped, hooked or otherwise such that the position of the outer end of the outer end of the rectum is completely fixed. This prevents the detached outer end of the rectum becoming detached from the guide at an undesired moment so that it can go back into the carcass. This return into the carcass is a regular occurrence in current practice and is a cause of contamination of the carcass. The controlled position of the outer end of the rectum also has the advantage of simplifying the further processing. Since the position of the outer end of the rectum is fixed, it is unnecessary to reposition the outer end of the rectum during a subsequent process. A further processing can hereby also be mechanized more readily or even automated. It is noted here that the outer end of the rectum is engaged at a short distance from the anal orifice of the carcass. Depending on the engaging member used, it is thus possible to place the guide at a greater distance from the anal orifice, which distance must then be spanned by the engaging member connected to the-guide. When this is the case it is however still possible to speak of a parallel transport of carcass and outer end of the rectum, wherein guiding of the outer end of the rectum takes place at a short distance from the anal orifice but wherein the physical guide can be situated at some distance.

In a preferred embodiment the outer end of the rectum is pulled out of the carcass during step B) using underpressure. Through the use of underpressure possible loose parts, such as for instance excreta, are extracted simultaneously with engaging of the outer end of the rectum. Another advantage of engaging using underpressure is that outer ends of the rectum of relatively varying geometry can easily be engaged.

In order to simplify the method the outer end of the rectum can be pulled out of the carcass during step B) by a tool with which the outer end of the rectum is drilled out during step A). It is thus also possible to carry the drilled-out outer end of the rectum a . greater distance from the carcass, with all the associated advantages for positioning and guiding of the outer end of the rectum. Through the dual-purpose use of the tool, a separate positioning process for pulling out the outer end of the rectum is moreover unnecessary. The processing of carcasses of extremely varying dimensions in the same processing line is now also more readily possible, particularly in those cases where guiding of the outer end of the rectum takes place along a fixed path. During pulling of the outer end of the rectum out of the carcass during step B) one or more connections between rectum and carcass can be broken simultaneously, with the advantage that a still further movement of the outer end of the rectum away from the carcass is possible and that a more complete separation simultaneously takes place, this being advantageous in the further processing of the carcass. Alternatively, it is also possible that one or more connections between rectum and carcass are broken before commencing pulling of the outer end of the rectum out of the carcass during step B). Further manual cutting of the intestine can for instance be envisaged here. Also an advantage here is that an outer end of the rectum can be pulled further out of a carcass.

In another preferred embodiment the pulled-out outer end of the rectum is engaged between the head and the carcass. The drilled-out outer end of the rectum is provided on the outer end with a head, also referred to as arse-hole, which is broader and less resilient than the other detached part of the rectum. By engaging on the outer end of the rectum between carcass and head this latter forms a thickened portion which prevents the engaged outer end of the rectum from detaching at an undesired moment. The outer end of the rectum is preferably engaged herein such that it is compressed. The danger of the content of the rectum exiting from the outer end of the rectum is thus further limited.

The outer end of the rectum can be guided during step C) in that it is carried by a guide, but it is also possible for the outer end of the rectum to be engaged by engaging means, which engaging means are displaced along a guide during step C). The outer end of the rectum can herein be guided and positioned during step C) subject to the geometry and position of the carcass for processing. The separate outer. ends of the rectum of successive carcasses can thus be engaged individually, for instance at varying distances from a rigid guide, via engaging parts displaceable along such a guide and having a varying operating length (depending on the carcass dimensions). The most appropriate method of guiding can be chosen subject to inter alia the carcasses for processing and the distance over which guiding has to take place.

Prior to detaching of the outer end of the rectum of a carcass by progressing through the steps A-C the processes of cleaving the pubic bone and opening the belly are preferably carried out. This processing sequence also forms part of the application independently of the above described methods. It is also possible to have the process of removing the pizzle or male genital organ take place between cleaving of the pubic bone and opening of the belly. It is also possible to carry out severing of some of the connections between intestine and carcass prior to detaching of the outer end of the rectum. By performing these processes prior to drilling out of the outer end of the rectum the removal of the guts can take place at a relatively short distance from drilling out of the outer end of the rectum. This has the advantage that the outer end of the rectum only has to be guided over a limited distance.

In another preferred method the outer end of the rectum is cleaned with a disinfectant, for instance a lactic acid solution or steam, during the guiding according to step C). Contaminants originating from the outer end of the rectum are directly neutralized by cleaning the outer end of the rectum and subsequently collecting and discharging the cleaning agent. This also results in an increased hygiene during slaughter.

The invention also provides a device for detaching the outer end of the rectum of a carcass, according claim 13. Such a device can be embodied comparatively simply and existing systems with a conveyor for carcasses and at least one vent cutter, depending on the type, can readily be modified to a device according to the invention. The device provides the option of holding the outer end of a drilled-out outer end of the rectum at a distance from a carcass and, during displacement of the carcass, of co-displacing the outer end of the rectum with the carcass in a manner such that the outer end of the rectum remains in more or less the same position relative to the carcass. This outer end is thus prevented from coming into contact in uncontrolled manner with the carcass, with all the associated drawbacks. The device can be embodied such that no operator is required; the device can operate fully automatically. This results in a reduction of the manpower needed in a slaughter line. This is particularly the case when the device according to the invention is applied instead of a device wherein the outer end of an outer end of the rectum is enclosed with for instance a bag. The arrangement and removal of the enclosure does after all require manpower. The arrangement of an enclosure is unnecessary with the device according to the invention. The placing of the guide means close to the anal orifices of carcasses - carried by the conveyor moreover has the advantage that access to the abdominal cavity is not obstructed by the guide means. The placing of the guide means also makes it possible using the pull-out means to place the outer ends of the rectum in simple manner in contact with the guide means.

The guide means are preferably disposed substantially parallel to the conveyor. Since during displacement of the carcass the engaged, drilled-out outer end of the rectum has to be co-displaced with the carcass, it is recommended to place the conveyor and the guide mutually parallel. The pulled-out outer end of the rectum will then be minimally loaded, so that the chance of breakage or damage also remains limited.

In a preferred embodiment of the device the guide means are also provided with engaging means for engaging the outer ends of the rectum during guiding such that they are prevented from returning to their original position during the guiding. Through engaging (grasping, clamping etc.) of the outer end of the rectum the position thereof is wholly known. This simplifies further processing of the carcass. It is moreover not possible for a drilled-out outer end of the rectum to detach from the guide and for instance then return to the original position of the outer end of the rectum in the carcass, with all the associated drawbacks thereof.

In a preferred embodiment the guide means are placed such that they are located on the rear side of a carcass. Since the stretch of the drilled-out part of the rectum is limited, the outer end of the rectum must be engaged at a relatively short distance (5-25 centimetres) from the position in which it was situated in the carcass. The engaging means must be located for this purpose at a short distance from the original position of the anus. It is thus recommended to place engaging means and guide means close to the rectal area, i.e. close to the pelvic channel, which is located on the rear side or ham side of the carcass.

In another preferred embodiment the guide means are mounted displaceably and are provided with control means for positioning the guide means subject to the geometry and position of a carcass. Since the stretch of the drilled-out part of the rectum is limited, the engaging and control means must be situated a short distance from the original position of the anal orifice, as already explained above. In order to make the device flexible such that carcasses of varying geometry can be processed, it is recommended to vary the position of the guide means and/or the engaging means subject to the geometry of a carcass. This can be realized in simple manner for instance by mounting the guide means pivotally in a frame and by also providing the guide means with a stop which can lie against a carcass. The position of the guide means is also determined depending on the position in which the stop is placed by a carcass. It is thus possible for instance to mount the guide means for pivoting round a shaft located on the top part of a carcass. It is of course also possible to detect the geometry of a carcass by means of sensors and to control the position of the engaging and/or guide means subject to the detected measurement value. Another variant consists of the engaging and/or guide means being flexible or being suspended . flexibly, so that the position thereof changes when a sufficiently great load is applied.

In a preferred embodiment the engaging and guide means comprise a guide slot for receiving and guiding an outer end of the rectum. The mutually opposite elements of such a guide slot can be placed under a bias directed toward each other. An outer end of the rectum can be placed in such a guide slot and then slide through the guide slot when the carcass is displaced. The guide slot thus fulfills the function of both guide means and engaging means. The construction of such engaging and guiding means is very simple. For sufficiently firm engaging of the outer end of the rectum and to prevent the head sliding between the mutually opposite elements of the guide slot, these mutually opposite elements can be placed under a bias directed toward each other. They thus exert a clamping force on the outer end of the rectum. In another preferred embodiment the engaging and guide means comprise at least one engaging member which is displaceable in a guide. Such a guide can take an endless form and a part thereof then preferably runs substantially parallel to the conveyor. The engaging member can thus be embodied as a gripper or fork in which the outer end of the rectum can be placed, and this engaging member can be arranged on a carriage which is displaceable in a guide. Since after performing its function the engaging member has to be returned to the starting position so as to engage a following outer end of the rectum, the guide can take an endless form so that the engaging member can be moved back to the starting position without engaging on an outer end of the rectum. The path of such an endless guide over which an engaging member engages on an outer end of the rectum must lie substantially parallel to the conveyor to prevent large loads being exerted on the engaged outer end of the rectum.

In yet another variant the engaging and guide means are combined with the suspending means with which the carcasses engage on the conveyor. The carcasses are generally suspended on hooks which can be provided with engaging means for engaging the drilled-out outer ends of the rectum. A separate guide hereby becomes unnecessary because the conveyor is used simultaneously to guide the engaging means. The conveyor can be seen in this embodiment as guide means.

In yet another preferred embodiment the device is provided with pull-out means which engage by means of underpressure on the drilled-out outer end of the rectum. The advantages hereof have already been described above.

When the pull-out means are integrated with the vent cutter, a drilled-out outer end of the rectum can be pulled out without a subsequent positioning problem. In a preferred embodiment the vent cutter comprises for this purpose a jacket-like knife and a central core with a thickened outer end, which core is displaceable in axial direction relative to the jacket-like knife such that prior to drilling the core can be inserted into the anus and after drilling out is at least partly enveloped by the jacket-like knife, whereby the anus is enclosed between the jacket-like knife and the thickened outer end of the core. It must be possible for the displaceable core to protrude so far out of the vent cutter that the thickened outer end of the core is situated in the anus during drilling wherein no obstruction is caused by this outer end during drilling. By retracting the core in the direction of the vent cutter after drilling, the thickened outer end of the core engages internally on the edge of the drilled-out outer end of the rectum to thus urge this outer end against the vent cutter. In order to maintain this clamped situation of the drilled-out outer end of the outer end of the rectum for a time, the vent cutter can also be provided with fixation means for fixing the central core in a desired position relative to the vent cutter.

In a final preferred embodiment the device comprises cleaning means for cleaning an outer end of the rectum during guiding thereof. The danger of contamination of the carcass by the drilled-out outer end of the rectum can be further reduced by cleaning the outer end of the rectum with for instance a disinfectant or steam.

The present invention will be further elucidated with reference to the non-limitative embodiments in the following figures. Herein:
figure 1 shows a schematic view of successive processes on a carcass according to the invention,
figures 2a-f show schematic views of successive processing steps in the detaching of the outer end of the rectum of a carcass, wherein the outer end of the rectum is carried by a guide,
figure 3 is a schematic view of a variant of the device shown in figures 2a-f with a rigid guide arid co-displacing engaging members,
figure 4 is a schematic view of another variant of the device shown in figures 2a-f for guiding the outer end of the rectum of a carcass which is positionable subject to the geometry of the carcass in question,
figure 5 is a schematic side view of a slaughtered animal with engaged, drilled-out outer end of the rectum, wherein cleaning means are arranged for cleaning the outer end of the rectum, and
figure 6 is a schematic view of a variant of a carcass wherein the outer end of the rectum is carried along a guide, but wherein the engaging of the outer end of the rectum takes place at a variable distance from the guide.

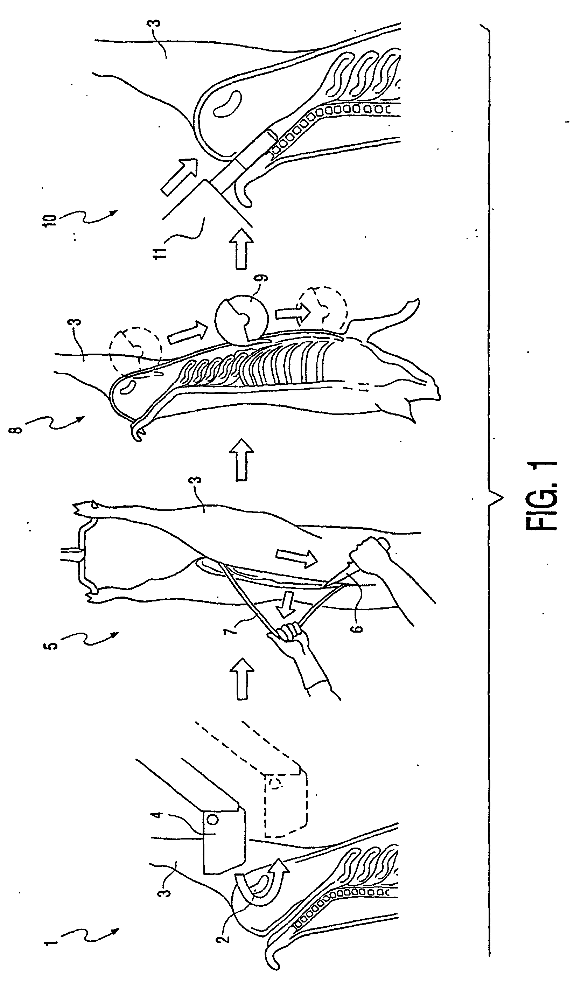

Figure 1 shows a first processing 1 wherein the pubic bone 2 of a suspended carcass 3 is cleaved by means of a knife 4. The ham is herein also divided into two symmetrical parts. An additional advantage of performing this operation first of all is that removal of the male organ is simplified and opening of the belly is thereby simplified.

After performing this first process 1 a second processing 5 is carried out wherein a male organ 7 is removed manually using a knife 6. During performing of this second process 5 the carcass 3 can also be visually inspected and automatic operations in the vicinity can also be monitored. During a third processing 8 the belly of carcass 3 is opened using a knife 9.

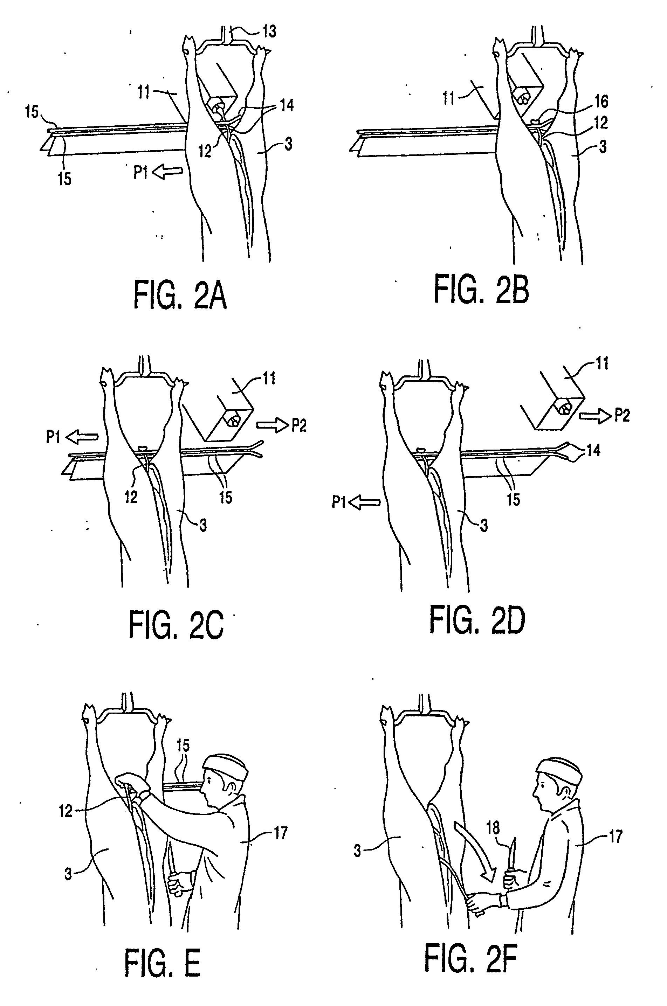

A subsequent fourth processing 10 is shown schematically here. The outer end of the rectum of carcass 3 is detached by means of a vent cutter 11. The continuation of this fourth processing 10 will be elucidated with reference to figures 2a-f.

Figure 2a shows that vent cutter 11 engages on the drilled-out outer end of the rectum 12. This engagement can take place for instance using underpressure. Carcass 3 is meanwhile hanging on a hook 13 which is moved in the direction according to arrow P1 along a guide (not shown in this figure). The outer end of the rectum 12 will herein be carried between two guide rods 15 through the wedge-shaped outer ends 14.

In figure 2b is shown that vent cutter 11 releases the outer end of the rectum 12. The outer end of the rectum 12 is provided on the side remote from carcass 3 with a thickened part 16, also designated the head.

Figure 2c shows that carcass 3 is moved further in the direction of arrow P1, wherein the outer end of the rectum 12 is meanwhile guided through guide rods 15. Vent cutter 11 can simultaneously be moved back as according to arrow P2 to a position for processing a following carcass.

Figure 2d shows carcass 3 in a position after it has almost reached the outer end of guide rods. 15. The subsequent processing is shown in figure 2e. A slaughterer 17 herein grasps the outer end of the rectum 12 such that it does not come into contact with the meat of carcass 3. The outer end of the rectum 12 is now released from guide rods 15.

Finally, figure 2f shows schematically that the slaughterer 17 severs the rectum and the guts connecting thereto from carcass 3 using a knife 18, so that they are separated from carcass 3.

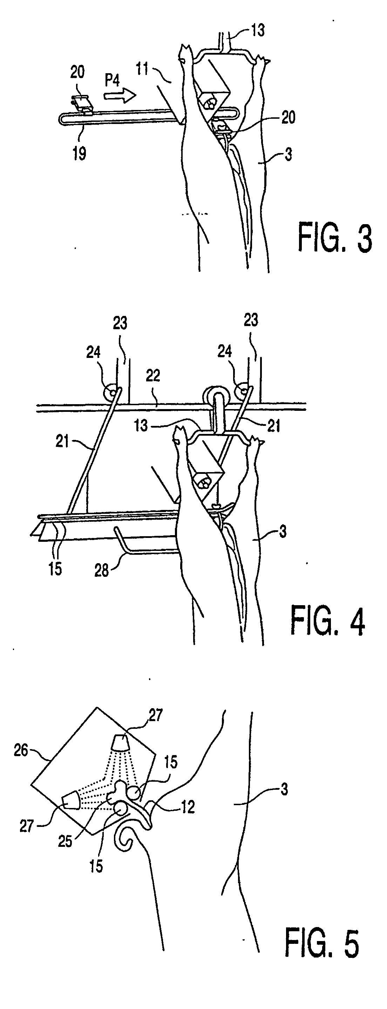

Figure 3 shows a variant of the guide applied in figures 2a-f formed by guide rods 15. This variant consists of a rigid endless guide 19 along which engaging members 20 are displaceable. In the embodiment shown in this figure the endless guide contains two engaging members 20, although it is of course also possible to mount more or fewer engaging members 20 on a guide 19. Guide 19 also has to be furnished with a provision for returning in the direction P4 the engaging members 20 which do not engage on an outer end of the rectum 12. This is possible for instance by mutually connecting engaging members 20 by means of a cable so that an engaging member 20 which is moved along by an outer end of the rectum 12 simultaneously co-displaces other engaging members 20. It is however also possible to arrange separate moving means.

Figure 4 shows a variant in which guide rods 15 are suspended pivotally on rods 21. In this figure is shown a conveyor 22 along which hooks 13 are displaceable. Conveyor 22 is suspended from a support construction 23, only a limited part of which is shown in this figure. Support construction 23 is provided with rotation points 24 on which rods 21 engage. Guide rods 15 will be urged so far downward under the influence of the force of gravity that a stop bracket 28 comes to lie against carcass 3. Guide rods 15 are thus positioned, particularly in horizontal direction, subject to the geometry of carcass 3. It is likewise possible to provide the device with vertical compensation means which can be realized in many diverse ways.

Finally, figure 5 shows a side view of a carcass 3 from which an outer end of the rectum 12 has been pulled-out. The outer end of the rectum 12 is provided with a head 25, shown in slightly overdimensioned manner. Guide rods 15 engage on the outer end of the rectum 12 at a position lying between head 25 and carcass 3, whereby the outer end of the rectum 12 cannot come loose of guide rods 15. A housing 26 open toward carcass 3 is arranged around guide 25. Cleaning nozzles 27 are arranged in housing 26 for cleaning a part of the outer end of the rectum 12, in particular head 25 and the region adjoining the outer end of the rectum 12, with a cleaning agent. This cleaning agent preferably consists of a disinfectant such as for instance a lactic acid solution. The used cleaning agent is then drained along the bottom of housing 26.

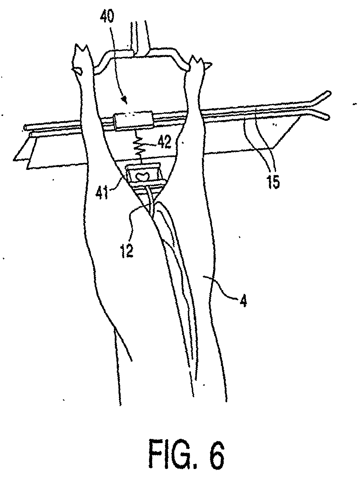

Figure 6 finally shows carcass 3 in a position comparable to that shown in figure 2c, although it can be seen in this figure that the outer end of the rectum 12 is not engaged directly by guide rods 15 but by an engaging member 40. This latter is displaceable along guide rods 15 and provided on the side remote from guide rods 15 with a jaw 41 which engages behind the head 16 onto the outer end of the rectum 12. The distance between jaw 41 and guide rods 15 is variable because engaging member 40 is provided with a flexible central part 42, the length of which depends on the force exerted by the outer end of the rectum 12. The path for guiding of the outer end of the rectum 12 is therefore not wholly fixed; the path covered will vary subject to for instance carcass dimensions.

Although the invention is elucidated with reference to only a few embodiments, it will be apparent to all that the invention is in no way limited to the described and shown embodiments: On the contrary, many variations are still possible for a skilled person within the scope of the invention.

## Claims

1. Method for detaching the outer end of the rectum of a carcass, comprising the steps of:
A) drilling out the outer end of the rectum,
B) pulling the drilled-out outer end of the rectum out of the carcass, and
C) guiding the carcass and guiding the outer end of the rectum at a distance from the carcass,
**characterised in that** the outer end of the rectum is carried along a guide located at the side of the carcass where the anal orifice is located.

2. Method as claimed in claim 1, **characterised in that** the outer end of the rectum pulled out during step B) is engaged during step C) such that the outer end of the rectum is prevented from returning to the original position thereof.

3. Method as claimed in claim 1 or 2, **characterised in that** the outer end of the rectum is pulled out of the carcass during step B) using underpressure.

4. Method as claimed in claim 1 or 2, **characterised in that** the outer end of the rectum is pulled out of the carcass during step B) by a tool with which the outer end of the rectum is drilled out during step A).

5. Method as claimed in any of the foregoing claims, **characterised in that** during pulling of the outer end of the rectum out of the carcass during step B) one or more connections between rectum and carcass are broken simultaneously.

6. Method as claimed in any of the claims 1-4, **characterised in that** one or more connections between rectum and carcass are broken before commencing pulling of the outer end of the rectum out of the carcass during step B).

7. Method as claimed in any of the claims 2-6, **characterised in that** the pulled-out outer end of the rectum is engaged during step C) between the head and the carcass.

8. Method as claimed in any of the foregoing claims, **characterised in that** the outer end of the rectum is guided during step C) **in that** it is carried by a guide.

9. Method as claimed in any of the claims 2-8, **characterised in that** the drilled-out outer end of the rectum is engaged. by engaging means, which engaging means are displaced along a guide during step C).

10. Method as claimed in any of the foregoing claims, **characterised in that** the outer end of the rectum is guided and positioned during step C) subject to the geometry and position of the carcass for processing.

11. Method as claimed in any of the foregoing claims, **characterised in that** prior to the steps A-C the processes are carried out of
- cleaving the pubic bone, and
- opening of the belly.

12. Method as claimed in any of the foregoing claims, **characterised in that** the outer end of the rectum is cleaned with a cleaning agent, such as a disinfectant or steam, during the guiding according to step C).

13. Device for detaching the outer end of the rectum of a carcass, comprising:
- a conveyor for carcasses,
- a vent cutter for separating an outer end of the rectum and a carcass,
- pull-out means for pulling the drilled-out outer end of the rectum from the carcass, and
- guide means for the pulled-out outer end of the rectum,
**characterised in that** the guide means are placed relative to the conveyor such that they are situated at the side of the carcasses where the anal orifices are located of the carcasses carried by the conveyor.

14. Device as claimed in claim 13, **characterised in that** the guide means are disposed substantially parallel to the conveyor.

15. Device as claimed in claim 13 or 14, **characterised in that** the guide means are also provided with engaging means for engaging the outer ends of the rectum during guiding such that they are prevented from returning to their original position during the guiding.

16. Device as claimed in any of the claims 13-15, **characterised in that** the guide means are mounted displaceably and are provided with control means for positioning the guide means subject to the geometry and position of a carcass.

17. Device as claimed in claim 15 or 16, **characterised in that** the engaging and guide means comprise a guide slot for receiving and guiding an outer end of the rectum.

18. Device as claimed in claim 17, **characterised in that** the mutually opposite elements forming the guide slot are placed under a bias directed toward each other.

19. Device as claimed in any of the claims 15-18, **characterised in that** the engaging and guide means comprise at least one engaging member which is displaceable in a guide.

20. Device as claimed in claim 19, **characterised in that** the guide is endless and a part of the guide is substantially parallel to the conveyor.

21. Device as claimed in any of the claims 13-20, **characterised in that** the device comprises cleaning agents for cleaning an outer end of the rectum during guiding thereof.

22. Device as claimed in any of the claims 13-15, **characterised in that** the engaging and guide means are combined with the suspending means with which the carcasses engage on the conveyor.

23. Device as claimed in any of the claims 13-22, **characterised in that** the pull-out means engage by means of underpressure on the drilled-out outer end of the rectum.

24. Device as claimed in any of the claims 13-23, **characterised in that** the pull-out means are integrated with the vent cutter.

25. Device as claimed in claim 24, **characterised in that** the vent cutter comprises a jacket-like knife and a central core with a thickened outer end, which core is displaceable in axial direction relative to the jacket-like knife such that prior to drilling the core can be inserted into the anus and after drilling out is at least partly enveloped by the jacket-like knife, whereby the anus is enclosed between the jacket-like knife and the thickened outer end of the core.

26. Device as claimed in claim 25, **characterised in that** the vent cutter is also provided with fixation means for fixing the central core in a desired position relative to the vent cutter.

## Patentansprüche

1. Verfahren zum Lösen des äußeren Endes des Mastdarms eines Schlachttierkörpers, bestehend aus den folgenden Schritten:
A) Herausschneiden des äußeren Endes des Mastdarms,
B) Herausziehen des ausgeschnittenen äußeren Endes des Mastdarms aus dem Tierkörper und
C) Führen des Tierkörpers und Führen des äußeren Endes des Mastdarms in einem Abstand zum Tierkörper,
**dadurch gekennzeichnet, dass** das äußere Ende des Mastdarms entlang einer Führung geleitet wird, die sich an der Seite des Tierkörpers befindet, an der die anale Öffnung liegt.

2. Verfahren nach Anspruch 1, **dadurch gekennzeichnet, dass** das in Schritt B) herausgezogene äußere Ende des Mastdarms in Schritt C) so festgehalten wird, dass das äußere Ende des Mastdarms an einer Rückkehr in seine ursprüngliche Position gehindert wird.

3. Verfahren nach Anspruch 1 oder 2, **dadurch gekennzeichnet, dass** das äußere Ende des Mastdarms in Schritt B) mittels Unterdruck aus dem Tierkörper herausgezogen wird.

4. Verfahren nach Anspruch 1 oder 2, **dadurch gekennzeichnet, dass** das äußere Ende des Mastdarms in Schritt B) mit Hilfe eines Werkzeugs herausgezogen wird, mit dem in Schritt A) das äußere Ende des Mastdarms herausgeschnitten worden ist.

5. Verfahren nach irgendeinem der vorangehenden Ansprüche, **dadurch gekennzeichnet, dass** während das äußere Ende des Mastdarms in Schritt B) aus dem Tierkörper herausgezogen wird, eine oder mehrere Verbindungen zwischen dem Mastdarm und dem Tierkörper gleichzeitig getrennt werden.

6. Verfahren nach irgendeinem der vorangehenden Ansprüche 1-4, **dadurch gekennzeichnet, dass** eine oder mehrere Verbindungen zwischen dem Mastdarm und dem Tierkörper getrennt werden, bevor in Schritt B) mit dem Herausziehen des äußeren Endes des Mastdarms aus dem Tierkörper begonnen wird.

7. Verfahren nach irgendeinem der vorangehenden Ansprüche 2-6, **dadurch gekennzeichnet, dass** das herausgezogene äußere Ende des Mastdarms in Schritt C) zwischen dem Kopf und dem Tierkörper festgehalten wird.

8. Verfahren nach irgendeinem der vorangehenden Ansprüche, **dadurch gekennzeichnet, dass** das äußere Ende des Mastdarms in Schritt C) geführt wird, indem es von einer Führung getragen wird.

9. Verfahren nach irgendeinem der vorangehenden Ansprüche 2-8, **dadurch gekennzeichnet, dass** das herausgeschnittene äußere Ende des Mastdarms von Greifwerkzeugen festgehalten wird, welche Greifwerkzeuge in Schritt C) entlang einer Führung verschoben werden.

10. Verfahren nach irgendeinem der vorangehenden Ansprüche, **dadurch gekennzeichnet, dass** das äußere Ende des Mastdarms in Schritt C) abhängig von der Geometrie und der Position des Tierkörpers bei der Verarbeitung geführt und positioniert wird.

11. Verfahren nach irgendeinem der vorangehenden Ansprüche, **dadurch gekennzeichnet, dass** vor den Schritten A-C die Verfahrensschritte
- Trennen des Schambeines und
- Öffnen des Bauches stehen.

12. Verfahren nach irgendeinem der vorangehenden Ansprüche, **dadurch gekennzeichnet, dass** das äußere Ende des Mastdarms mit einem Reinigungsmittel, wie zum Beispiel einem Desinfektionsmittel oder Dampf, gereinigt wird während der Führungsvorgang entsprechend Schritt C) stattfindet.

13. Vorrichtung zum Lösen des äußeren Endes des Mastdarms eines Schlachttierkörpers, bestehend aus:
- einem Fördermittel für Tierkörper,
- einer Bauchtrennvorrichtung zum Trennen eines äußeren Endes des Mastdarms von einem Tierkörper,
- Herausziehvorrichtungen zum Lösen des herausgeschnittenen äußeren Endes des Mastdarms aus dem Tierkörper und
- Führungen für das herausgelöste äußere Ende des Mastdarms,
**dadurch gekennzeichnet, dass** die Führungen relativ zum Fördermittel auf eine Weise angeordnet sind, dass sie auf der Seite der Tierkörper angeordnet sind, dort wo sich an den vom Fördermittel transportierten Tierkörpern die analen Öffnungen befinden.

14. Vorrichtung nach Anspruch 13, **dadurch gekennzeichnet, dass** die Führungen im wesentlichen parallel zum Fördermittel angeordnet sind.

15. Vorrichtung nach Anspruch 13 oder 14, **dadurch gekennzeichnet, dass** die Führungen auch mit Greifwerkzeugen zum Greifen der äußeren Enden des Mastdarms während des Führungsvorgangs versehen sind, auf eine Weise, dass sie während des Führungsvorgangs an einer Rückkehr in ihre ursprüngliche Position gehindert werden.

16. Vorrichtung nach irgendeinem der Ansprüche 13-15, **dadurch gekennzeichnet, dass** die Führungen verschiebbar angebracht sind und mit Betätigungsmitteln zum Positionieren der Führungen versehen sind, wobei die Geometrie und Position eines Tierkörpers berücksichtigt wird.

17. Vorrichtung nach Anspruch 15 oder 16, **dadurch gekennzeichnet, dass** die Greif- und Führungsmittel eine Führungsrinne zur Aufnahme und Führung eines äußeren Endes des Mastdarms umfassen.

18. Vorrichtung nach Anspruch 17, **dadurch gekennzeichnet, dass** die sich gegenüberliegenden Elemente, die die Führungsrinne bilden, zueinander schräg verlaufen.

19. Vorrichtung nach irgendeinem der Ansprüche 15-18, **dadurch gekennzeichnet, dass** die Greif- und Führungsmittel mindestens ein Greifelement umfassen, das in einer Führung verschiebbar ist.

20. Vorrichtung nach Anspruch 19, **dadurch gekennzeichnet, dass** die Führung endlos ist und ein Teil der Führung im wesentlichen parallel zum Fördermittel verläuft.

21. Vorrichtung nach irgendeinem der Ansprüche 13-20, **dadurch gekennzeichnet, dass** die Vorrichtung Reinigungsmittel zum Reinigen eines äußeren Endes des Mastdarms während seiner Führung umfasst.

22. Vorrichtung nach irgendeinem der Ansprüche 13-15, **dadurch gekennzeichnet, dass** die Greif- und Führungsmittel mit der Aufhängevorrichtung, mit der die Tierkörper an dem Fördermittel festgehalten werden, verbunden sind.

23. Vorrichtung nach irgendeinem der Ansprüche 13-22, **dadurch gekennzeichnet, dass** die Mittel zum Herausziehen an dem herausgeschnittenen äußeren Ende des Mastdarms mit Hilfe von Unterdruck angreifen.

24. Vorrichtung nach irgendeinem der Ansprüche 13-23, **dadurch gekennzeichnet, dass** die Herausziehvorrichtungen mit der Bauchtrennvorrichtung eine Einheit bilden.

25. Vorrichtung nach Anspruch 24, **dadurch gekennzeichnet, dass** die Bauchtrennvorrichtung ein mantelähnliches Messer und einen zentralen Kern mit einem verdickten äußeren Ende umfasst, welcher Kern bezogen auf das mantelähnliche Messer in axialer Richtung verschiebbar ist, auf eine Weise, dass der Kern vor dem Herausschneiden in den Anus eingeführt werden kann und nach dem Herausschneiden zumindest teilweise von dem mantelähnlichen Messer umschlossen wird, wobei der Anus zwischen dem mantelähnlichen Messer und dem verdickten äußeren Ende des Kerns eingeschlossen wird.

26. Vorrichtung nach Anspruch 25, **dadurch gekennzeichnet, dass** die Bauchtrennvorrichtung auch mit Befestigungsmitteln versehen ist, um den zentralen Kern relativ zur Bauchtrennvorrichtung in einer gewünschten Position zu fixieren.

## Revendications

1. Procédé pour détacher l'extrémité externe du rectum d'une carcasse, comprenant les étapes :
A) de dégagement par forage de l'extrémité externe du rectum ;
B) d'extraction de l'extrémité externe du rectum dégagée par forage, hors de la carcasse, et
C) de guidage de la carcasse et de guidage de l'extrémité externe du rectum à une certaine distance de la carcasse,
**caractérisé en ce que** l'extrémité externe du rectum est transportée le long d'un guide situé du côté de la carcasse où se trouve l'orifice anal.

2. Procédé selon la revendication 1, **caractérisé en ce que** l'extrémité externe du rectum extrait durant l'étape B) est saisie durant l'étape C) de manière à empêcher l'extrémité externe du rectum de revenir à sa position initiale.

3. Procédé selon la revendication 1 ou 2, **caractérisé en ce que** l'extrémité externe du rectum est extraite de la carcasse durant l'étape B) en créant une dépression.

4. Procédé selon la revendication 1 ou 2, **caractérisé en ce que** l'extrémité externe du rectum est extraite de la carcasse durant l'étape B) par un outil avec lequel l'extrémité externe du rectum a été dégagée par forage durant l'étape A).

5. Procédé selon l'une quelconque des revendications précédentes, **caractérisé en ce que**, durant l'extraction de l'extrémité externe du rectum hors de la carcasse durant l'étape B), une ou plusieurs attaches entre le rectum et la carcasse sont rompues simultanément.

6. Procédé selon l'une quelconque des revendications 1 à 4, **caractérisé en ce qu'**une ou plusieurs attaches entre le rectum et la carcasse sont rompues avant de commencer à extraire l'extrémité externe du rectum hors de la carcasse durant l'étape B).

7. Procédé selon l'une quelconque des revendications 2 à 6, **caractérisé en ce que** l'extrémité externe extraite est saisie durant l'étape C) entre la tête et la carcasse.

8. Procédé selon l'une quelconque des revendications précédentes, **caractérisé en ce que** l'extrémité externe du rectum est guidée durant l'étape C) en ce sens qu'elle est transportée par un guide.

9. Procédé selon l'une quelconque des revendications 2 à 8, **caractérisé en ce que** l'extrémité externe du rectum dégagée par forage est saisie par des moyens de saisie, lesquels moyens de saisie sont déplacés le long d'un guide durant l'étape C).

10. Procédé selon l'une quelconque des revendications précédentes, **caractérisé en ce que** l'extrémité externe du rectum est guidée et positionnée durant l'étape C) en fonction de la géométrie et de la position de la carcasse en vue de son traitement.

11. Procédé selon l'une quelconque des revendications précédentes, **caractérisé en ce que**, avant les étapes A à C, on exécute les processus :
- de clivage de l'os pubien, et
- d'ouverture de l'abdomen.

12. Procédé selon l'une quelconque des revendications précédentes, **caractérisé en ce que** l'extrémité externe du rectum est nettoyée avec un agent nettoyant tel qu'un désinfectant ou de la vapeur, durant le guidage selon l'étape C).

13. Dispositif pour détacher l'extrémité externe du rectum d'une carcasse, comprenant :
- un convoyeur de carcasses ;
- un organe de coupe de segment rectal pour séparer une extrémité externe du rectum et une carcasse ;
- des moyens d'extraction pour extraire l'extrémité externe du rectum dégagée par forage, hors de la carcasse, et
- des moyens formant guide pour l'extrémité externe extraite du rectum,
**caractérisé en ce que** les moyens formant guide sont placés par rapport au convoyeur de telle sorte qu'ils sont situés du côté des carcasses où se trouvent les orifices anaux des carcasses transportées par le convoyeur.

14. Dispositif selon la revendication 13, **caractérisé en ce que** les moyens formant guide sont disposés d'une manière essentiellement parallèle au convoyeur.

15. Dispositif selon la revendication 13 ou 14, **caractérisé en ce que** les moyens formant guide sont également pourvus de moyens de saisie pour saisir les extrémités externes du rectum durant le guidage de manière à les empêcher de revenir à leur position initiale durant le guidage.

16. Dispositif selon l'une quelconque des revendications 13 à 15, **caractérisé en ce que** les moyens formant guide sont montés de manière amovible et **en ce qu'**ils sont pourvus de moyens de commande pour positionner les moyens formant guide en fonction de la géométrie et de la position d'une carcasse.

17. Dispositif selon la revendication 15 ou 16, **caractérisé en ce que** les moyens de saisie et les moyens formant guide comprennent une fente de guidage pour recevoir et guider une extrémité externe du rectum.

18. Dispositif selon la revendication 17, **caractérisé en ce que** les éléments mutuellement opposés formant la fente de guidage sont placés selon une diagonale dirigée l'une vers l'autre.

19. Dispositif selon l'une quelconque des revendications 15 à 18, **caractérisé en ce que** les moyens de saisie et les moyens formant guide comprennent au moins un organe de saisie qui est déplaçable dans un guide.

20. Dispositif selon la revendication 19, **caractérisé en ce que** le guide est sans fin et **en ce qu'**une partie du guide est essentiellement parallèle au convoyeur.

21. Dispositif selon l'une quelconque des revendications 13 à 20, **caractérisé en ce que** le dispositif comprend des agents nettoyants pour nettoyer une extrémité externe du rectum durant son guidage.

22. Dispositif selon l'une quelconque des revendications 13 à 15, **caractérisé en ce que** les moyens de saisie et les moyens formant guide sont combinés aux moyens de suspension avec lesquels les carcasses sont saisies sur le convoyeur.

23. Dispositif selon l'une quelconque des revendications 13 à 22, **caractérisé en ce que** les moyens d'extraction saisissent en créant une dépression l'extrémité externe du rectum dégagée par forage.

24. Dispositif selon l'une quelconque des revendications 13 à 23, **caractérisé en ce que** les moyens d'extraction sont intégrés dans l'organe de coupe de segment rectal.

25. Dispositif selon la revendication 24, **caractérisé en ce que** l'organe de coupe de segment rectal comprend un couteau en forme de manchon et une mèche centrale ayant une extrémité externe épaissie, laquelle mèche peut être déplacée dans le sens axial par rapport au couteau en forme de manchon de telle sorte que, avant le forage, la mèche peut être insérée dans l'anus et que, après le dégagement par forage, elle est au moins partiellement enveloppée par le couteau en forme de manchon, l'anus étant enserré entre le couteau en forme de manchon et l'extrémité externe épaissie de la mèche.

26. Dispositif selon la revendication 25, **caractérisé en ce que** l'organe de coupe de segment rectal est aussi pourvu de moyens de fixation pour fixer la mèche centrale dans une position voulue par rapport à l'organe de coupe de segment rectal.
